# FASCICULE DE BREVET EUROPEEN

(11) **EP 1 474 923 B1**
(45) Date de publication et mention de la délivrance du brevet: **02.11.2006**
(21) Numéro de dépôt: 03718832.3
(22) Date de dépôt: 04.02.2003
(51) Int. Cl.: H04N 7/16, H04N 7/167

(54) **PROCEDE POUR CONTROLER L'ACCES A UN CONTENU PAR UN TERMINAL, TERMINAL, SERVEUR DE DROITS D'USAGE, AUTOMATE DE DISTRIBUTION, SERVEUR FOURNISSEUR, SUPPORT DE DONNEES ET SYSTEME ASSOCIES**
VERFAHREN ZUM KONTROLLIEREN DES ZUGRIFFS AUF INHALTSDATEN DURCH EIN ENDGERÄT, ENDGERÄT, BENUTZUNGRECHTESERVER, AUSGABEAUTOMAT, BEREITSTELLENDER SERVER, DATENTRÄGER UND SYSTEM DAZU
METHOD FOR MONITORING ACCESS TO CONTENT BY A TERMINAL, TERMINAL, USER RIGHTS SERVER, DISTRIBUTION AUTOMATON, SUPPLIER SERVER, DATA MEDIUM, AND SYSTEM ASSOCIATED THEREWITH

(30) Priorité: 15.02.2002 FR 0201972
(43) Date de publication de la demande: 10.11.2004
(73) Titulaire: FRANCE TELECOM, 75015 Paris (FR)
(72) Inventeur: BERTIN, Christian, F-35000 Rennes (FR)
(86) Numéro de dépôt international: PCT/FR2003/000338
(87) Numéro de publication internationale: WO 2003/071798

(56) Documents cités:
- EP-A- 1 109 405
- EP-A- 1 244 307
- GB-A- 2 343 049
- PATENT ABSTRACTS OF JAPAN vol. 2000, no. 10, 17 novembre 2000 (2000-11-17) & JP 2000 195168 A (LG ELECTRONICS INC), 14 juillet 2000 (2000-07-14)

## Description

La présente invention concerne un procédé pour contrôler l'accès à un contenu par un terminal ainsi qu'un terminal, un serveur de droits d'usage de contenu, un automate de distribution de secondes parties de contenu, un serveur fournisseur de parties de contenu, un support de données et un système pour la mise en oeuvre du procédé.

Certaines chaînes de télévision diffusent vers des récepteurs des programmes, encore appelés contenus, en contrôlant l'accès de ces récepteurs aux programmes diffusés. Une méthode connue de contrôle d'accès aux contenus diffusés consiste à embrouiller les contenus-et à communiquer une ou plusieurs clé(s) de désembrouillage aux récepteurs autorisés à recevoir ces contenus. Il existe différentes variantes de mise en oeuvre de cette méthode de contrôle d'accès.

Une première variante consiste à décomposer le contenu en paquets de données, à marquer les paquets à l'aide soit d'un indicateur pair soit d'un indicateur impair et à embrouiller les paquets marqués par l'indicateur pair à l'aide d'une première clé d'embrouillage et les paquets de données marqués par l'indicateur impair à l'aide d'une seconde clé d'embrouillage, différente de la première.

Les contenus diffusés peuvent être décomposés en plusieurs flux de données. Par exemple, un contenu peut être décomposé, pour chaque type de données audio et vidéo, en un flux de données de base et en un ou plusieurs flux de données complémentaires destinés à améliorer la qualité du signal véhiculé par le flux de base. Chaque récepteur peut ainsi adapter la qualité du signal reçu à ses propres capacités, en utilisant le flux de base et éventuellement un ou plusieurs flux complémentaires. Dans ce cas, une deuxième variante de réalisation du procédé de contrôle d'accès aux contenus diffusés consiste à embrouiller uniquement l'un des flux, par exemple le flux audio de base, de manière à dégrader la qualité sonore de la composante audio du contenu. Seuls les récepteurs ayant la bonne clé peuvent exploiter la composante audio du contenu avec une qualité sonore optimale.

Une troisième variante consiste à décomposer le contenu en un flux de données élémentaire, dont la restitution conduit à une composante discernable du contenu mais non directement utilisable, et en un flux de données complémentaire permettant une restitution complète du contenu, et à embrouiller le seul flux complémentaire.

Ces différentes méthodes de contrôle d'accès aux contenus consistent à protéger le contenu par embrouillage de tout ou partie du contenu. Or, les contenus embrouillés, totalement ou partiellement, sont exposés au risque de piratage et de copie frauduleuse.

Le problème technique de l'invention consiste donc à proposer un procédé pour contrôler l'accès à un contenu par un terminal qui permette de limiter le risque de piratage et de copies frauduleuses.

Ce problème est résolu par un procédé selon la revendication 1.

Par le procédé revendiqué la première partie du contenu, stockée dans le terminal, ne permet pas à elle seule de restituer convenablement le contenu. Pour restituer le contenu, le terminal doit récupérer la seconde partie du contenu sur le support externe puis combiner les deux parties du contenu.

Dans un mode de réalisation particulier de l'invention, on relève, de façon aléatoire, les valeurs d'octets du contenu et on enregistre dans la mémoire du support les valeurs relevées des octets, formant la seconde partie du contenu, et leurs positions respectives dans le contenu. Un tel mode de prélèvement d'octets convient à tout type de codage.

En variante, on relève, de façon ciblée, les valeurs d'octets du contenu et on enregistre dans la mémoire du support les valeurs relevées des octets, formant la seconde partie du contenu, et leurs positions respectives dans le contenu. Un tel mode de prélèvement des octets permet de prélever des octets essentiels du contenu d'origine de manière à perturber celui-ci de façon fiable.

Afin d'obtenir la première partie du contenu, on peut supprimer les octets dont les valeurs ont été relevées ou modifier les valeurs d'octets relevées.

Avantageusement,
- un titulaire dudit support acquiert des droits d'usage du contenu et
- avant de reconstituer le contenu à partir des deux parties de contenu, on vérifie la validité des droits d'usage et on n'autorise la reconstitution du contenu que si les droits d'usage sont valides.

Ainsi, pour reconstituer le contenu, le terminal doit non seulement avoir accès au support de mémoire stockant la seconde partie du contenu, mais les droits d'usage du contenu attribués au titulaire du support doivent également être valides. Ces droits d'usage du contenu peuvent consister, par exemple, en une durée d'usage ou en un nombre d'usages. L'octroi de droits d'usage du contenu au terminal permet de limiter encore davantage les risques de piratage.

Avantageusement, on enregistre dans la mémoire du support une adresse réseau d'un serveur de droits d'usage et, pour vérifier la validité des droits d'usage, le terminal se connecte au serveur de droits à travers le réseau.

Avantageusement encore, le terminal récupère la première partie du contenu selon l'une des méthodes suivantes :
- par téléchargement de la première partie depuis un site d'informations à travers un réseau de type IP,
- par lecture de la première partie sur un support externe,
- par réception d'un message électronique contenant la première partie du contenu.

De préférence, on introduit le support dans un automate de distribution qui enregistre la seconde partie du contenu dans la mémoire du support.

En variante, on enregistre la seconde partie du contenu dans la mémoire du support en fin de fabrication dudit support.

L'invention concerne également un terminal, pour la mise en oeuvre du procédé défini ci-dessus, comprenant des moyens pour acquérir une première partie d'un contenu, des moyens de lecture d'un support de mémoire externe et des moyens pour reconstituer ledit contenu par combinaison de la première partie du contenu et d'une seconde partie du contenu extraite de la mémoire du support externe.

L'invention concerne également un automate de distribution de secondes parties de contenu, pour la mise en oeuvre du procédé précédemment défini, comprenant des moyens d'acquisition de secondes parties de contenu selon la revendication 14, des moyens d'interface homme-machine agencés pour permettre à un utilisateur de sélectionner l'une des secondes parties de contenu et des moyens pour enregistrer la seconde partie de contenu sélectionnée dans une mémoire d'un support de mémoire externe.

L'invention concerne également un serveur fournisseur de premières et secondes parties de contenu, pour la mise en oeuvre du procédé précédemment défini, comprenant une base de données contenus contenant une pluralité de contenus et des moyens pour scinder chaque contenu de la base en une première et une seconde parties de contenu et des moyens d'envoi desdits première et seconde parties selon la revendication 18.

L'invention concerne également un support de données, pour la mise en oeuvre du procédé précédemment défini, destiné à contenir une partie d'un contenu permettant de reconstituer ledit contenu selon la revendication 19.

L'invention concerne enfin un système pour la mise en oeuvre du procédé précédemment défini tel que revendiqué par la revendication 21.

L'invention sera mieux comprise à l'aide de la description suivante d'un mode de réalisation particulier du procédé pour contrôler l'accès à un contenu par un terminal et d'une forme de réalisation particulière des différents dispositifs pour la mise en oeuvre du procédé, selon l'invention, en référence aux dessins annexés sur lesquels :
- la figure 1 représente une vue du système de l'invention;
- la figure 2 représente un schéma bloc fonctionnel d'un fournisseur de contenus réduits et d'extraits de contenu associés de la figure 1 ;

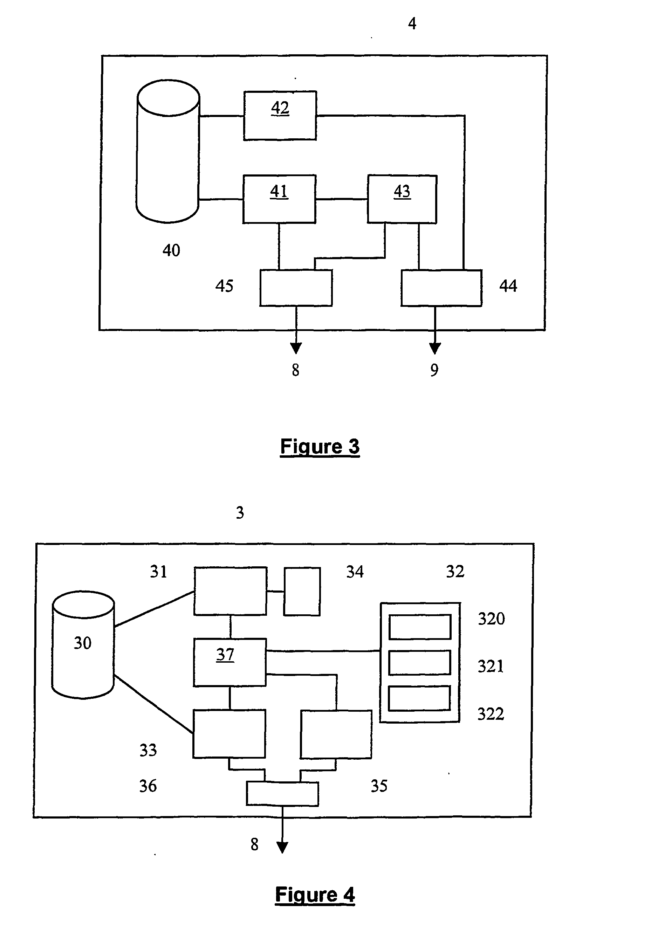

- la figure 3 représente un schéma bloc fonctionnel d'un serveur de droits d'usage de contenu de la figure 1 ;
- la figure 4 représente un schéma bloc fonctionnel d'un automate de distribution d'extraits de contenu de la figure 1 ;

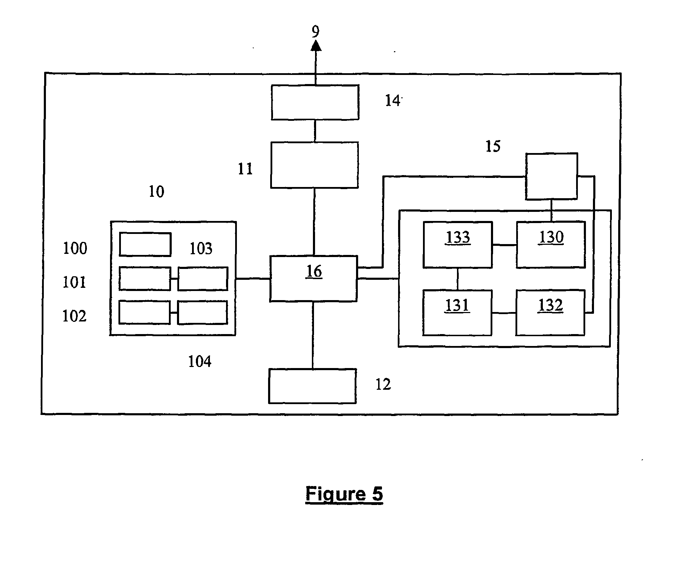

- la figure 5 représente un schéma bloc fonctionnel du terminal de la figure 1;
- les figures 6 et 6A à 6E représentent des organigrammes des différentes étapes du procédé.

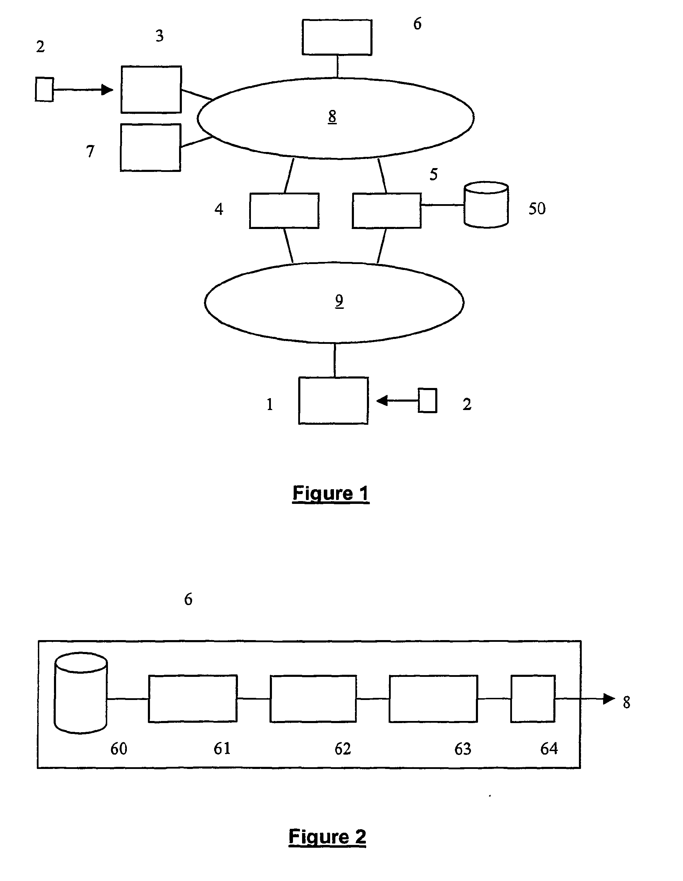

Le système représenté sur la figure 1 comprend un terminal 1 de lecture de contenu, un support de mémoire 2, en l'espèce une carte à mémoire, un serveur 6 fournisseur de contenus réduits et d'extraits de contenu, un automate 3 de distribution d'extraits de contenu, un serveur 4 de droits d'usage de contenu, un site WEB 5 de diffusion de contenus réduits, un centre 7 d'autorisation de paiement et deux réseaux, ici un réseau de type IP privé 8 et l'Internet 9. Par souci de clarté, on a représenté sur la figure 1 un seul automate de distribution 3 et un seul terminal 1. Cependant, le système comprend de préférence une pluralité d'automates de distribution et une pluralité de terminaux de lecture.

Le serveur 6 fournisseur de contenus réduits et d'extraits de contenu associés comprend une base de données contenus 60, un module d'embrouillage 61, un module 62 d'éclatement de contenus, un module d'envoi 63 et un module 64 de connexion au réseau privé IP 8.

D'emblée on notera qu'une référence d'identification est attribuée à chaque contenu.

La base de données contenus 60 contient une pluralité de contenus et, pour chaque contenu, la référence d'identification de ce contenu, des informations descriptives sur ce contenu, une clé d'embrouillage et une clé de désembrouillage correspondante. Les informations descriptives d'un contenu contiennent le titre du contenu, sa durée, un résumé, des informations sur les personnes liées à ce contenu (réalisateur, acteurs, producteur, etc.) et autres informations de nature à intéresser un spectateur potentiel du contenu.

Le module d'éclatement 62, relié à la base de données 60 et au module d'envoi 63, est destiné à scinder les contenus de la base de données 60 en une première et une seconde parties, que l'on appellera respectivement « contenu réduit » et « extrait de contenu ». L'opération « d'éclatement » d'un contenu consiste à relever des valeurs d'octets de ce contenu, en localisant les positions respectives de ces octets. Les octets dont les valeurs sont relevées sont ici choisis de façon aléatoire. Ces octets sont ici supprimés du contenu d'origine. L'ensemble des octets relevés forme l'extrait de contenu tandis que le contenu d'origine « délesté » des octets relevés constitue le contenu réduit.

Le module d'embrouillage 61, interposé entre la base de données 60 et le module d'éclatement 62, est destiné à embrouiller les contenus à l'aide de la clé d'embrouillage mémorisée dans la base de données 60 et à fournir au module d'envoi 63 la clé de désembrouillage correspondante.

Le module d'envoi 63, relié au module 64 de connexion au réseau IP 8, est destiné à transmettre
- les contenus réduits vers le site WEB 5 et
- les extraits de contenu associés avec, pour chaque extrait de contenu, la clé de désembrouillage du contenu d'origine et les positions respectives des octets du contenu d'origine dont les valeurs ont été relevées, vers l'automate 3.

L'automate 3 comprend une base de données locale 30, un module d'enregistrement 31, un ensemble 32 d'interface homme-machine, un module 33 d'acquisition d'extraits de contenu, un logement 34 de réception d'une carte à mémoire, un module 35 de connexion au serveur de droits 4 et un module 36 de connexion au réseau privé IP 8. Tous ces éléments sont reliés à une unité centrale 37 commandant le fonctionnement de l'automate 3.

La base de données 30 contient des extraits de contenu et, pour chacun de ces extraits, la référence d'identification du contenu d'origine (c'est-à-dire du contenu d'où l'extrait est prélevé), des informations descriptives relatives à ce contenu, les positions respectives des octets relevés dans le contenu d'origine et formant l'extrait de contenu et la clé de désembrouillage du contenu d'origine. La base de données 30 pourrait être externe à l'automate 3.

L'ensemble d'interface homme-machine 32 comprend un clavier de saisie 320, un écran d'affichage 321 et une application d'interface homme-machine 322 permettant à un utilisateur de visualiser à l'écran 321 la liste des contenus pour lesquels des extraits sont stockés dans la base de données 30, et de sélectionner l'un des contenus de cette liste afin de commander l'enregistrement de l'extrait correspondant dans la mémoire d'une carte introduite dans le logement 34.

Le module d'enregistrement 31, relié à la base de données 30, est destiné à extraire de la base de données 30 l'extrait d'un contenu sélectionné par l'utilisateur à l'aide de l'application 322, les positions respectives dans le contenu d'origine, des octets dont les valeurs ont été relevées et formant cet extrait de contenu, ainsi que la référence d'identification et la clé de désembrouillage du contenu d'origine et à enregistrer toutes ces informations dans une carte à mémoire introduite dans le logement 34.

Le module d'acquisition 33, relié à la base de données 30 et au réseau privé IP 8 par l'intermédiaire du module de connexion 36, est destiné à acquérir les extraits de contenu et des informations relatives à ces contenus (référence d'identification, informations descriptives et positions des octets relevés dans le contenu d'origine), auprès du fournisseur 6 à travers le réseau privé IP 8. Lorsque le fournisseur 6 reçoit de nouveaux contenus, il en informe l'automate 3. Celui-ci se connecte alors au fournisseur 6 et récupère les extraits des nouveaux contenus. En variante, l'automate 3 pourrait se connecter régulièrement au fournisseur 6 afin de récupérer les extraits des nouveaux contenus. Selon une autre variante, l'automate 3 pourrait n'avoir aucune base de données. Dans ce cas, pour chaque extrait de contenu demandé par un utilisateur, l'automate se connecterait au fournisseur 6 pour récupérer l'extrait de contenu demandé.

Le module 35 de connexion au serveur de droits 4, relié au module de connexion IP 36, permet à l'automate 3 de se connecter au serveur de droits 4 et de mettre ainsi en relation le titulaire d' une carte à mémoire 2 avec le serveur de droits d'usage 4 afin de permettre au titulaire de la carte 2 d'acquérir des droits d'usage sur un contenu.

Le serveur 4 est destiné à fournir à des utilisateurs des droits d'usage portant sur des contenus. Un droit d'usage d'un contenu est ici constitué d'une durée d'usage prédéterminée, pendant laquelle le titulaire du droit d'usage peut librement utiliser le contenu. En variante, le droit d'usage pourrait être un nombre prédéterminé d'utilisations, c'est-à-dire de restitutions, du contenu. Le serveur 4 comprend une base de données utilisateurs 40, un module 41 de gestion de la base de données 40, un module d'autorisation d'usage 42, un module de transaction 43, un module 44 de connexion Internet et un module 45 de connexion au réseau privé IP 8.

La base de données utilisateurs 40 contient, pour chaque utilisateur, un identifiant et un code confidentiel d'utilisateur ainsi que les éventuels droits d'usage de l'utilisateur portant sur un ou plusieurs contenus, avec la référence d'identification du ou des contenus considéré(s).

Le module d'autorisation d'usage 42, relié à la base de données 40 et au module de connexion Internet 44, est destiné à vérifier la validité de droits d'usage d'utilisateurs portant sur des contenus, afin d'autoriser ou d'interdire l'utilisation de ces contenus par ces utilisateurs.

Le module de transaction 43 est relié à l'Internet 9, par l'intermédiaire du module de connexion Internet 44, et au réseau IP privé 8, par l'intermédiaire de l'interface 45. Ce module 43 est destiné à effectuer des transactions d'achats de droits d'usage de contenu par des utilisateurs.

Le module de gestion 41 est relié à la base de données 40, au module de connexion 45 et au module de transaction 43. Ce module 41 enregistre, modifie et supprime des informations dans la base de données 40, en tenant compte notamment d'informations fournies par des utilisateurs par l'intermédiaire du module de transaction 43, et met régulièrement à jour les droits d'usage des utilisateurs dans la base de données 40.

Le site WEB 5, hébergé par un serveur de l'Internet 9, est relié à une base de données 50 contenant une pluralité de contenus réduits et, pour chaque contenu réduit, la référence d'identification du contenu d'origine et les informations descriptives du contenu (titre, durée, résumé, etc.) sur la base desquelles les utilisateurs pourront choisir s'ils souhaitent ou non acquérir ce contenu. Le site 5 est agencé pour présenter à des terminaux visiteurs la liste des contenus pour lesquels des contenus réduits sont mémorisés dans la base de données 50 et, pour chacun de ces contenus, les informations descriptives correspondantes (titre, résumé, durée, etc.), et permet aux terminaux d'obtenir une copie de ces contenus réduits.

Le terminal de lecture 1 comprend une interface homme-machine 10, un navigateur Internet 11, un lecteur 12 de carte à mémoire, un lecteur de contenus 13, un module de connexion à l'Internet 14, une mémoire 15 de stockage de contenus réduits et une unité centrale de commande 15.

L'interface homme-machine 10 comprend un clavier de saisie 100, un écran de visualisation 101 et un équipement de diffusion sonore 102. L'écran 101 et l'équipement 102 sont reliés à deux convertisseurs numérique/analogique CNA respectifs 103 et 104 destinés à convertir les données vidéo et les données audio en un signal audio et un signal vidéo.

Le navigateur Internet 11, relié au module de connexion Internet 14, permet au terminal 1 de naviguer sur l'Internet, et notamment de se connecter à des sites WEB.

Le lecteur de carte 12 est agencé pour recevoir et pour lire des cartes à mémoire.

Le lecteur de contenu 13 comprend un module 130 d'acquisition de contenus réduits, un module 131 de commande de lecture, un module 132 de reconstitution et de décodage du contenu et un module d'interface homme-machine 133.

Le module d'acquisition 130, relié à la mémoire 15, est "destiné à acquérir des contenus réduits par téléchargement depuis le site WEB 5, à l'aide du navigateur 11, et à stocker ces contenus réduits dans la mémoire 15.

Le module de commande 131, relié au module de reconstitution et de codage 132 et au module d'interface homme-machine 133, est destiné à déclencher la lecture d'un contenu après avoir effectué certaines vérifications, comme cela sera explicité plus loin.

En vue de la restitution d'un contenu par le terminal 1, le module 132 est destiné à reconstituer le contenu considéré par combinaison du contenu réduit correspondant, stocké dans la mémoire 15, et de l'extrait du contenu stocké dans la carte à mémoire introduite dans le lecteur 12, puis à désembrouiller et à décoder le contenu reconstitué. Les opérations de combinaison, de désembrouillage et de décodage sont ici exécutées par une même application de telle sorte qu'il est extrêmement difficile d'accéder de l'extérieur au résultat intermédiaire de chacune de ces opérations. En variante, les trois opérations (reconstitution, désembrouillage et décodage) pourraient être exécutées par un même élément matériel monobloc. Un même module monobloc pourrait également exécuter les opérations de combinaison, de désembrouillage, de décodage et de conversion numérique/analogique des données audio et/ou vidéo. Ce même module pourrait en outre exécuter l'opération de restitution du signal audio et/ou vidéo.

Le module d'interface homme-machine 133, relié aux modules 130 et 131, permet à un utilisateur
- d'acquérir des droits d'usage d'un contenu auprès du serveur de droits 4 ;
- de commander le téléchargement d'un contenu réduit depuis le site WEB 5 et son enregistrement dans la mémoire 131 et
- de commander la lecture d'un contenu à partir d'un contenu réduit stocké dans la mémoire 131 et d'un extrait de contenu mémorisé dans une carte à mémoire.

Tous les éléments du terminal 1 sont reliés à l'unité centrale 15, destinée à commander le fonctionnement du terminal 1.

Un distributeur de cartes, à savoir un automate distributeur ou un vendeur spécialisé, remet à un utilisateur la carte à mémoire 2 qui contient
- un identifiant et un code confidentiel d'utilisateur ainsi que
- l'adresse URL de localisation sur l'Internet 9 du serveur 4 de droits d'usage de contenu.

L'identifiant et le code confidentiel d'utilisateur sont parallèlement transmis au serveur 4 et stockés dans la base de données utilisateurs 40 de celui-ci.

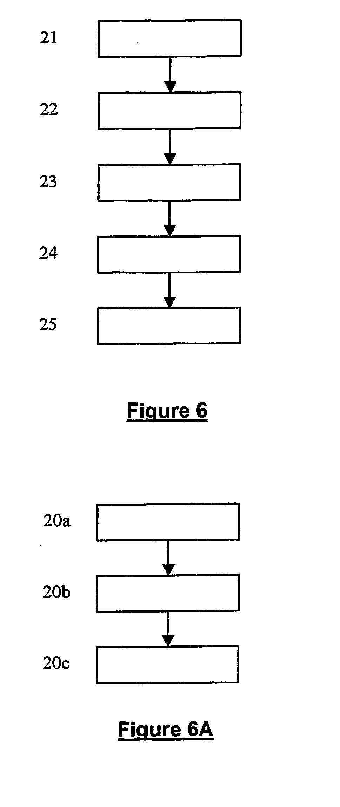

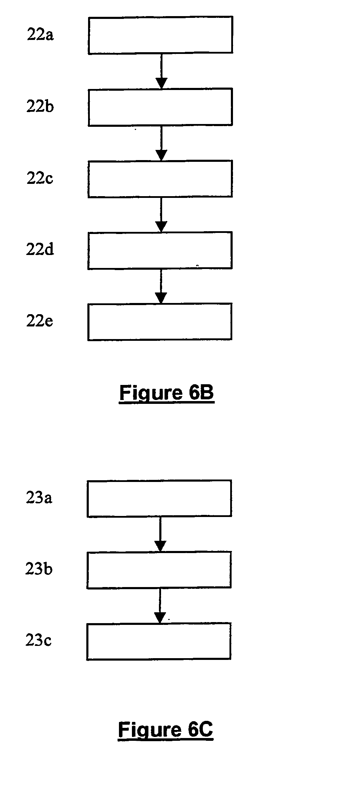

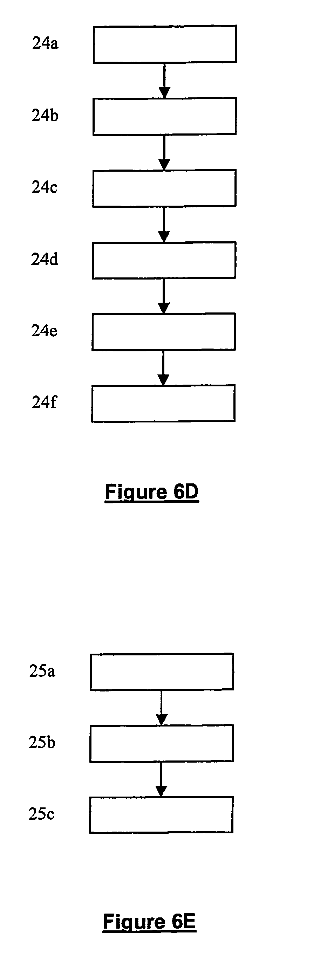

Le procédé pour contrôler l'accès à un contenu par le terminal 1 va maintenant être explicité, en référence aux figures 6 et 6A à 6E.

En référence à la figure 6A, pour chaque contenu stocké dans la base de données 60, le fournisseur 6 embrouille le contenu à l'aide de la clé d'embrouillage mémorisée dans la base de données 60 (étape 20a), le scinde en un contenu réduit et un extrait de contenu complémentaire (étape 20b) et envoie le contenu réduit et l'extrait de contenu associé respectivement vers le site WEB 5, à travers l'Internet 9, et vers l'automate 3, à travers le réseau privé IP 8 (étape 20c). Pour scinder le contenu (étape 20b), le fournisseur 6 relève, ici de façon aléatoire, les valeurs d'octets du contenu d'origine et repère la position de chacun de ces octets. Les octets dont les valeurs ont été relevées sont ici supprimés du contenu d'origine. Lors de l'étape 20c, le fournisseur 6 envoie au site WEB 5, avec le contenu réduit, une référence d'identification et les informations descriptives du contenu d'origine et à l'automate 3, avec l'extrait de contenu complémentaire, les positions des octets relevés formant l'extrait dans le contenu d'origine ainsi que la référence d'identification, la clé de désembrouillage et les informations descriptives du contenu d'origine.

Les étapes visant à acquérir et à restituer un contenu donné C₁, à l'aide du terminal 1, vont maintenant être décrites. Par définition, on appellera « C_{1R} » et « E_{C1}» le contenu réduit et l'extrait du contenu C₁ respectivement.

Dans une étape 21, le terminal 1 acquiert le contenu réduit C_{1R} par téléchargement depuis le site WEB 5. Pour cela, à l'aide du navigateur 11, le terminal 1 se connecte au site WEB 5 qui lui fournit la liste des contenus réduits disponibles. Sous la commande d'un utilisateur, le terminal 1 sélectionne le contenu réduit C_{1R} et adresse au site 5 une requête d'acquisition du contenu réduit C_{1R} sélectionné. Sur réception de cette requête, le site 5 envoie au terminal 1, à travers l'Internet 9, le conduit réduit protégé (c'est-à-dire embrouillé) sélectionné C_{1R}, la référence d'identification du contenu d'origine C₁ et les informations descriptives de ce contenu C₁. Le contenu réduit protégé C_{1R} ainsi que la référence d'identification et les informations descriptives du contenu C₁ sont stockées dans la mémoire 131. Le contenu réduit protégé C_{1R} ainsi acquis ne permet pas, à lui seul, de restituer le contenu d'origine C₁, même après désembrouillage. Pour restituer le contenu d'origine, le terminal 1 doit récupérer l'extrait de contenu complémentaire E_{C1}.

Dans une étape 22, le titulaire de la carte à mémoire 2 acquiert des droits d'usage du contenu C₁ à partir de son terminal 1. Pour cela, en référence à la figure 6B, dans une étape 22a, le titulaire de la carte 2 introduit celle-ci dans le lecteur 12 du terminal 1 et connecte ainsi la mémoire de la carte 2 au terminal 1. Dans une étape 22b, sous la commande du titulaire de la carte, le terminal 1 se connecte à l'adresse URL du serveur 4, extraite de la carte à mémoire 2, et, dans une étape 22c, adresse au serveur 4 une requête d'achat de droits d'usage du contenu C₁. Cette requête contient l'identifiant et le code confidentiel d'utilisateur, extraits de la carte à mémoire 2, ainsi que la référence d'identification du contenu C₁. Dans une étape 22d, le serveur 4, en coopération avec le centre d'autorisation de paiement 7, effectue la transaction puis attribue au titulaire de la carte 2 les droits d'usage requis. Dans une étape 22e, le serveur 4 enregistre les droits d'usage de l'utilisateur, portant sur le contenu C₁, dans sa base de données 40. Au lieu d'acquérir des droits d'usage portant sur le contenu C₁ en se connectant au serveur de droits 4, à travers l'Internet 9, à partir de son terminal 1, le titulaire de la carte à mémoire 2 pourrait acquérir des droits d'usage de contenu auprès du serveur de droits 4, par l'intermédiaire de l'automate 3, à travers le réseau privé 8.

L'étape 23 consiste à enregistrer l'extrait de contenu E_{C1} dans la carte à mémoire 2. Pour cela, en référence à la figure 6C, dans une étape 23a, l'utilisateur, titulaire de la carte 2, introduit celle-ci dans le logement 34 de l'automate 3 et, dans une étape 23b, sélectionne l'extrait de contenu E_{C1} dans une liste d'extraits de contenu affichée par l'automate 3 sur son écran 321. Dans une étape 23c, l'automate 3 enregistre dans la carte à mémoire 2 l'extrait de contenu E_{C1} sélectionné, les positions respectives dans le contenu C₁ des octets dont les valeurs ont été relevées, formant l'extrait de contenu E_{C1}, la référence d'identification du contenu d'origine correspondant C₁, la clé de désembrouillage de ce contenu C₁ et éventuellement des informations descriptives relatives au contenu C₁. On notera ici que l'étape 23 d'enregistrement de l'extrait de contenu E_{C1} dans la carte à mémoire 2 peut être effectuée avant l'étape 21 d'acquisition du contenu réduit C_{1R}. A ce stade, la carte à mémoire 2 contient donc :
- l'identifiant et le code confidentiel du titulaire de la carte 2,
- l'adresse URL du serveur de droits 4,
- la référence d'identification du contenu C₁,
- la clé de désembrouillage du contenu C₁,
- l'extrait du contenu C₁,
- les positions respectives des octets dont les valeurs ont été relevées, formant l'extrait de contenu, dans le contenu C₁ et
- éventuellement des informations descriptives relatives au contenu C₁.

Les étapes 21, 22 et 23 étant indépendantes l'une de l'autre, elles peuvent donc être mises en oeuvre dans un ordre quelconque, sauf si on subordonne l'enregistrement d'un extrait de contenu dans la carte à mémoire 2 à l'achat préalable de droits d'usage afin de limiter le risque de fraude.

Dans une étape 24, sous la commande du module 131, le terminal 1 effectue des vérifications avant de restituer le contenu C₁.

Pour cela, en référence à la figure 6D, dans une étape 24a, l'utilisateur connecte à nouveau sa carte à mémoire au terminal 1, en l'introduisant dans le lecteur de carte 12, et, dans une étape 24b, commande la lecture du contenu C₁ dont l'extrait E_{C1} est contenu dans la mémoire 131. Dans une étape 24c, le terminal 1 vérifie que la référence d'identification associée au contenu réduit C_{1R} stocké dans la mémoire 15 est identique à celle associée à l'extrait de contenu E_{C1} stocké dans la mémoire de la carte 12. En cas d'identité entre les deux référence d'identification de contenu (autrement dit en cas de correspondance entre le contenu réduit C_{1R} stocké dans le terminal 1 et l'extrait de contenu E_{C1} stocké dans la carte à mémoire 2), dans une étape 24d, le terminal 1 se connecte au serveur de droits 4 à travers l' Internet 9 et lui transmet une requête aux fins d'obtenir une autorisation de lecture, ou d'usage, du contenu C₁. Cette requête contient la référence d'identification du contenu C₁ ainsi que l'identifiant et le code confidentiel de l'utilisateur titulaire de la carte 2. Dans une étape 24e, le serveur 4 recherche dans la base de données 4 les droits d'usage de l'utilisateur du terminal 1, à l'aide de l'identifiant et du code confidentiel d'utilisateur reçus, et vérifie que le terminal 1 dispose de droits d'usage valides portant sur le contenu C₁ et, si tel est le cas, détermine la durée d'usage autorisée restante. Dans une étape 24f, le serveur 4 autorise la lecture du contenu C₁ par le terminal 1, par l'envoi d'une notification d'autorisation d'usage du contenu indiquant la durée d'usage autorisée restante. Sur réception de cette autorisation, dans une étape 24g, le terminal 1 déclenche la lecture du contenu C₁.

Dans une étape 25, le terminal 1 lit le contenu C₁. Pour cela, en référence à la figure 6E, dans une étape 25a, le module de reconstitution et de décodage 132 i) combine le contenu réduit C_{1R}, stocké dans la mémoire 15, et de l'extrait de contenu E_{C1}, stocké dans la mémoire de la carte 2, à l'aide de l'indication des positions respectives des octets relevés dans le contenu d'origine C₁ contenue dans la carte à mémoire 2, ii) dans une étape 25b, désembrouille le contenu C₁ reconstitué à l'aide de la clé de désembrouillage extraite de la carte à mémoire 2 et iii) dans une étape 25c, le terminal 1 restitue le contenu C₁, autrement dit affiche la composante vidéo du contenu C₁ sur l'écran 101 et diffuse la composante audio du contenu C₁ à l'aide de l'équipement sonore 102.

Par ailleurs, le terminal 1 vérifie régulièrement la validité des droits d'usage du terminal 1 portant sur le contenu C₁, en calculant la durée restante d'usage du contenu C₁, à l'aide d'un chronomètre interne au terminal 1 non représenté. Après expiration de la durée d'usage autorisée restante reçue, le terminal 1 interdit la lecture du contenu.

En cas d'interruption du fonctionnement du terminal 1 avant expiration de la durée d'usage autorisée, le terminal 1 doit se reconnecter au serveur de droits 4 et lui demander à nouveau une autorisation pour utiliser le contenu C₁.

Dans la description qui précède, le terminal 1 acquiert le contenu réduit par téléchargement depuis un site WEB 5. En variante, on pourrait envisager que le terminal 1 acquiert le contenu réduit C_{1R} selon l'une des méthodes suivantes :
- par lecture du contenu réduit C_{1R} sur un support externe tel qu'un CD-ROM, ou
- par réception à travers l'Internet d'un message électronique contenant le contenu réduit C_{1R}.

Pour chaque extrait de contenu demandé par un utilisateur, l'automate 3 pourrait remettre à l'utilisateur un support de mémoire contenant l'extrait de contenu souhaité et les informations relatives au contenu d'origine (positions des octets relevés, référence d'identification, clé de désembrouillage), au lieu d'enregistrer ces données dans la carte à mémoire personnelle de l'utilisateur. Dans ce cas, l'automate pourrait enregistrer dans le support de mémoire l'identifiant et le code confidentiel de l'utilisateur, fournis par celui-ci, ou, en variante, l'utilisateur pourrait entrer son identifiant et son code confidentiel dans le terminal de lecture. L'extrait de contenu pourrait être enregistré dans le support de mémoire en fin de fabrication dudit support.

L'automate de distribution 3 pourrait également distribuer des CD-ROM, ou autres types de supports de données, contenant des contenus réduits.

Le contenu pourrait ne pas être embrouillé, l'éclatement du contenu permettant en lui-même de contrôler l'accès au contenu.

A l'inverse, on pourrait également embrouiller l'extrait de contenu, c'est-à-dire les valeurs d'octets relevées et les positions respectives de ces octets dans le contenu d'origine. Dans ce cas, on pourrait enregistrer la clé de désembouillage correspondante dans la carte à mémoire 2.

Au lieu de récupérer intégralement le contenu réduit avant l'étape de reconstitution du contenu d'origine, le terminal pourrait acquérir le contenu réduit en mode « streaming », c'est-à-dire au fil de l'eau, à partir d'un un site WEB, et reconstituer, désembrouiller, décoder et restituer le contenu en temps réel, au fur et à mesure de la réception du contenu réduit.

Au lieu de relever des valeurs d'octets de façon aléatoire dans le contenu d'origine, on pourrait relever les valeurs d'octets choisis de façon ciblée, de manière à relever des octets essentiels. Grâce à cela, on perturbe le contenu de façon plus fiable.

En outre, au lieu de supprimer les octets dont les valeurs ont été relevées dans le contenu d'origine, on pourrait les modifier, en changeant leurs valeurs.

Dans la description qui précède, l'automate 3 récupère directement les extraits de contenu auprès du fournisseur 6. En variante, l'automate 3 se connecte au site WEB 5 afin de consulter les contenus réduits disponibles et, sur requête, le site WEB 5 lui indique l'adresse du fournisseur de contenus 6 auprès duquel les extraits de contenu correspondants sont disponibles. On pourrait en effet envisager de prévoir plusieurs fournisseurs de contenus. De même, on pourrait envisager plusieurs sites WEB 5 fournisseurs de contenus réduits.

Afin de réduire les risques de fraude, on pourrait subordonner l'enregistrement d'un extrait de contenu sur la carte à mémoire 2 à l'achat préalable de droits d'usage de ce contenu. Dans la description qui précède, l'identification de l'utilisateur, titulaire de la carte à mémoire 2, s'effectue par reconnaissance de son identifiant et de son code confidentiel. Bien entendu, on pourrait prévoir un autre mode d'identification.

L'automate de distribution 3 pourrait comprendre un module pour acquérir des extraits de contenu par téléchargement depuis un serveur fournisseur d'extraits de contenu, tel que le serveur 6.

## Revendications

1. Procédé pour contrôler l'accès à un contenu par un terminal, comprenant les étapes consistant :
- à relever les valeurs d'une pluralité d'octets du contenu en localisant les positions respectives desdits octets et à supprimer ou à modifier les octets dont les valeurs ont été relevées dans le contenu d'origine, afin de scinder (20b) ledit contenu en une première partie, formée par le contenu sans les octets dont les valeurs ont été relevées ou avec lesdits octets modifiés et ne permettant pas, à elle seule, de restituer le contenu d'origine, et une seconde partie, formée par les octets relevés ;
- à stocker (21) la première partie dans le terminal (1) ;
- à enregistrer (23) la seconde partie ainsi que les positions respectives dans le contenu d'origine des octets formant ladite seconde partie dans une mémoire localisée sur un support (2) externe au terminal (1) ;
- à connecter (24a) ledit support (2) au terminal (1) et
- à reconstituer (25a) le contenu en combinant les deux parties à l'aide des positions respectives des octets dont les valeurs ont été relevées.

2. Procédé selon la revendication 1, dans lequel les octets dont les valeurs sont relevées sont choisis de façon aléatoire.

3. Procédé selon la revendication 1, dans lequel les octets dont les valeurs sont relevées sont choisis de façon aléatoire de façon ciblée.

4. Procédé selon l'une des revendications 1 à 3, dans lequel
- un titulaire dudit support (2) acquiert (22) des droits d'usage du contenu et
- avant de reconstituer le contenu à partir des deux parties de contenu, on vérifie (24e) la validité des droits d'usage et on n'autorise la reconstitution du contenu que si les droits d'usage sont valides.

5. Procédé selon la revendication 4, dans lequel on enregistre dans la mémoire du support (2) une adresse réseau d'un serveur de droits d'usage (4) et, pour vérifier la validité des droits d'usage, le terminal (1) se connecte au serveur de droits (4) à travers le réseau (9).

6. Procédé selon l'une des revendications 1 à 5, dans lequel le terminal (1) récupère la première partie du contenu selon l'une des méthodes suivantes :
- par téléchargement (21) de la première partie depuis un site d'informations (5) à travers un réseau de type IP,
- par lecture de la première partie sur un support externe,
- par réception d'un message électronique contenant la première partie du contenu.

7. Procédé selon l'une des revendications 1 à 6, dans lequel on introduit le support (2) dans un automate de distribution (3) qui enregistre la seconde partie du contenu dans la mémoire du support (2).

8. Procédé selon l'une des revendications 1 à 7, dans lequel on enregistre la seconde partie du contenu dans la mémoire du support (2) en fin de fabrication dudit support.

9. Procédé selon l'une des revendications 1 à 8, dans lequel on embrouille (20a) le contenu avant de le scinder en deux parties et on enregistre (23c) dans la mémoire du support (2) une clé de désembrouillage.

10. Procédé selon l'une des revendications 1 à 9, dans lequel on embrouille la seconde partie du contenu et on enregistre dans la mémoire du support (2) une clé de désembrouillage.

11. Terminal, pour la mise en oeuvre du procédé de la revendication 1, comprenant des moyens (130) pour acquérir une première partie d'un contenu formée par ledit contenu sans une pluralité d'octets dont les valeurs ont été relevées ou avec lesdits octets modifiés et ne permettant pas, à elle seule, de restituer le contenu d'origine, des moyens (12) de lecture d'un support de mémoire externe (2) et des moyens (132) pour reconstituer ledit contenu par combinaison de la première partie du contenu et d'une seconde partie du contenu, extraite de la mémoire du support (2) et formée par la pluralité d'octets dont les valeurs ont été relevées dans le contenu, à l'aide des positions respectives desdits octets dans le contenu d'origine.

12. Terminal selon la revendication 11, dans lequel il est prévu des moyens (133) pour acquérir des droits d'usage portant sur le contenu et des moyens (131) pour se connecter à un serveur de droits d'usage afin de vérifier la validité des droits d'usage, destinés à commander les moyens (132) pour reconstituer le contenu.

13. Terminal selon l'une des revendications 11 et 12, dans lequel les moyens (130) pour acquérir la première partie du contenu sont agencés pour acquérir cette première partie suivant au moins l'une des méthodes suivantes :
- par téléchargement de la première partie depuis un site d'informations (5) à travers un réseau de type IP,
- par lecture de la première partie sur un support externe,
- par réception d'un message électronique contenant la première partie du contenu.

14. Automate de distribution de secondes parties de contenu, pour la mise en oeuvre du procédé de la revendication 1, comprenant
- des moyens pour acquérir des secondes parties de contenu comprenant une pluralité d'octets ayant été supprimés ou modifiés dans le contenu d'origine, ainsi que les positions respectives desdits octets dans le contenu d'origine,
- des moyens d'interface homme-machine (32) agencés pour permettre à un utilisateur de sélectionner l'une des secondes parties de contenu et
- des moyens (31) pour enregistrer la seconde partie de contenu sélectionnée ainsi que les positions respectives dans le contenu d'origine des octets formant ladite seconde partie dans une mémoire d'un support de mémoire externe (2).

15. Automate selon la revendication 14, dans lequel les moyens pour acquérir des secondes parties de contenu comprennent des moyens de liaison à une base de données locale (30) contenant une pluralité de secondes parties de contenu.

16. Automate selon la revendication 14, dans lequel les moyens pour acquérir des secondes parties de contenu sont agencés pour télécharger les secondes parties de contenu depuis un serveur fournisseur de secondes parties de contenu, à travers un réseau.

17. Automate selon l'une des revendications 14 à 16, dans lequel il est prévu des moyens de connexion à un serveur de droits d'usage, afin de permettre à un utilisateur d'acheter des droits d'usage auprès du serveur de droits par l'intermédiaire de l'automate.

18. Serveur fournisseur de parties de contenu, pour la mise en oeuvre du procédé de la revendication 1, comprenant
- une base de données contenus (60) contenant une pluralité de contenus,
- des moyens (62) d'éclatement de contenu, agencés pour relever les valeurs d'une pluralité d'octets d'un contenu de ladite base (60), en localisant les positions respectives desdits octets, et pour supprimer ou modifier lesdits octets dans le contenu, afin de scinder (20b) le contenu en une première partie, formée par le contenu sans les octets dont les valeurs ont été relevées ou avec lesdits octets modifiés et ne permettant pas, à elle seule, de restituer le contenu d'origine, et une seconde partie, formée par les octets dont les valeurs ont été relevées , et
- des moyens (63) d'envoi desdits première et seconde parties.

19. Support de données, pour la mise en oeuvre du procédé de la revendication 1, comprenant une mémoire contenant une partie d'un contenu, comprenant une pluralité d'octets ayant été supprimés ou modifiés dans le contenu d'origine, ainsi que les positions respectives desdits octets dans le contenu d'origine, ladite partie permettant de reconstituer le contenu.

20. Support de données selon la revendication 19, dans lequel, dans le cas où ladite partie de contenu est embrouillée, ladite mémoire contient des données permettant de désembrouiller la partie de contenu.

21. Système pour la mise en oeuvre du procédé de la revendication 1, comprenant
- un fournisseur (6) de parties de contenus localisé sur un premier réseau (8) destiné à relever les valeurs d'une pluralité d'octets d'un contenu, en localisant les positions respectives desdits octets, et à supprimer ou à modifier les octets dont les valeurs ont été relevées dans ledit contenu, afin de scinder le contenu en une première partie, formée par le contenu sans les octets dont les valeurs ont relevées ou avec lesdits octets modifiés et ne permettant pas, à elle seule, de restituer le contenu d'origine, et une seconde partie, formée par les octets dont les valeurs ont été relevées ,
- au moins un automate de distribution (3), destiné à recevoir des secondes parties de contenu et les positions respectives dans le contenu d'origine des octets formant ladite seconde partie, transmises par ledit fournisseur (6) à travers le premier réseau (8), et à distribuer les secondes parties de contenu, stockées sur des supports de données, à des utilisateurs et
- au moins un terminal (1) de lecture de contenu destiné à stocker la première partie d'un contenu, à lire un support de données externe afin d'en extraire la seconde partie dudit contenu et les positions respectives des octets formant ladite seconde partie dans le contenu d'origine, et à combiner la première et la seconde parties du contenu afin de reconstituer ledit contenu.

22. Système selon la revendication 21, dans lequel il est prévu un serveur de droits d'usage (4) destiné à attribuer des droits d'usage portant sur des contenus à des titulaires de supports de données.

23. Système selon l'une des revendications 22 et 23, dans lequel il est prévu un site d'informations (5), localisé sur un second réseau (9), destiné à transmettre des premières parties de contenu à des terminaux de lecture à travers le second réseau (9).

## Claims

1. Method for controlling access to a content by a terminal, comprising steps consisting:
- in recording the values of a plurality of octets of the content while locating the respective positions of said octets and in deleting or modifying the octets for which the values have been recorded in the original content, in order to divide (20b) said content into a first part, formed by the content without the octets for which the values have been recorded or with said octets modified and not permitting, on its own, the original content to be restored, and a second part, formed by the octets that have been recorded;
- in storing (21) the first part in the terminal (1) ;
- in saving (23) the second part and the respective positions in the original content of the octets forming said second part in a memory located on a medium (2) external to the terminal (1) ;
- in connecting (24a) said medium (2) to the terminal (1) and
- in reconstructing (25a) the content by combining the two parts using the respective positions of the octets for which the values have been recorded.

2. Method according to Claim 1, in which the octets for which the values have been recorded are chosen randomly.

3. Method according to Claim 1, in which the octets for which the values have been recorded are chosen randomly and in a targeted manner.

4. Method according to one of Claims 1 to 3, in which
- a holder of said medium (2) acquires (22) usage rights on the content and
- before reconstructing the content from the two content parts, the validity of the usage rights is checked (24e) and the reconstruction of the content is allowed only if the usage rights are valid.

5. Method according to Claim 4, in which a network address of a usage rights server (4) is saved in the memory of the medium (2) and, to check the validity of the usage rights, the terminal (1) is connected to the rights server (4) via the network (9) .

6. Method according to one of Claims 1 to 5, in which the terminal (1) recovers the first part of the content by one of the following methods:
- by downloading (21) the first part from an information site (5) via an IP type network,
- by reading the first part on an external medium,
- by receiving an electronic message containing the first part of the content.

7. Method according to one of Claims 1 to 6, in which the medium (2) is introduced into a dispensing machine (3) which saves the second part of the content in the memory of the medium (2).

8. Method according to one of Claims 1 to 7, in which the second part of the content is saved in the memory of the medium (2) at the end of the production of said medium.

9. Method according to one of Claims 1 to 8, in which the content is scrambled (20a) before being divided into two parts, and a descrambling key is saved (23c) in the memory of the medium (2).

10. Method according to one of Claims 1 to 9, in which the second part of the content is scrambled and a descrambling key is saved in the memory of the medium (2).

11. Terminal, for implementing the method of Claim 1, comprising means (130) for acquiring a first part of a content formed by said content without a plurality of octets for which the values have been recorded or with said octets modified and not permitting, on its own, the original content to be restored, means (12) for reading an external memory medium (2) and means (132) for reconstructing said content by combining the first part of the content and a second part of the content, extracted from the memory of the medium (2) and formed by the plurality of octets for which the values have recorded in the content, using the respective positions of said octets in the original content.

12. Terminal according to Claim 11, in which there are provided means (133) for acquiring usage rights relating to the content and means (131) for connecting to a usage rights server in order to check the validity of the usage rights, intended to control the means (132) for reconstructing the content.

13. Terminal according to one of Claims 11 and 12, in which the means (130) for acquiring the first part of the content are arranged to acquire this first part by at least one of the following methods:
- by downloading the first part from an information site (5) via an IP type network,
- by reading the first part on an external medium,
- by receiving an electronic message containing the first part of the content.

14. Machine for dispensing second content parts, for implementing the method of Claim 1, comprising
- means for acquiring second content parts comprising a plurality of octets having been deleted or modified in the original content, and the respective positions of said octets in the original content,
- man-machine interface means (32) arranged to enable a user to select one of the second content parts and
- means (31) for saving the selected second content part and the respective positions in the original content of the octets forming said second part in a memory of an external memory medium (2).

15. Machine according to Claim 14, in which the means for acquiring the second content parts comprise means for linking to a local database (30) containing a plurality of second content parts.

16. Machine according to Claim 14, in which the means for acquiring second content parts are arranged to download the second content parts from a server providing second content parts, via a network.

17. Machine according to one of Claims 14 to 16, in which there are provided means of connecting to a usage rights server, in order to enable a user to purchase usage rights from the rights server via the machine.

18. Server providing content parts, for implementing the method of Claim 1, comprising
- a content database (60) containing a plurality of contents,
- means (62) of breaking up the content, arranged to record the values of a plurality of octets of a content of said base (60) while locating the respective positions of said octets, and for deleting or modifying said octets in the content, in order to divide (20b) the content into a first part, formed by the content without the octets for which the values have recorded down or with said octets modified and not permitting, on its own, the original content to be restored, and a second part, formed by the octets for which the values have been recorded, and
- means (63) of sending said first and second parts.

19. Data medium, for implementing the method of Claim 1, comprising a memory containing a part of a content, including a plurality of octets having been deleted or modified in the original content, and the respective positions of said octets in the original content, said part enabling the content to be reconstructed.

20. Data medium according to Claim 19, in which, in the case where said content part is scrambled, said memory contains data for descrambling the content part.

21. System for implementing the method of Claim 1, comprising
- a provider (6) of content parts located on a first network (8) intended to record the values of a plurality of octets of a content while locating the respective positions of said octets, and to delete or modify the octets for which the values have been recorded in said content, in order to divide the content into a first part, formed by the content without the octets for which the values have been recorded or with said octets modified and not permitting, on its own, the original content to be restored, and a second part, formed by the octets for which the values have been recorded,
- at least one dispensing machine (3), intended to receive second content parts and the respective positions in the original content of the octets forming said second part, transmitted by said provider (6) via the first network (8), and to dispense the second content parts, stored on data media, to users and
- at least one content reading terminal (1) intended to store the first part of a content, read an external data medium in order to extract from it the second part of said content and the respective positions of the octets forming said second part in the original content, and to combine the first and second content parts in order to reconstruct said content.

22. System according to Claim 21, in which there is provided a usage rights server (4) intended to assign usage rights relating to contents to data media holders.

23. System according to one of Claims 22 and 23, in which there is provided an information site (5), located on a second network (9), intended to transmit first content parts to reading terminals via the second network (9).

## Patentansprüche

1. Verfahren zum Steuern des Zugriffs auf einen Inhalt durch ein Terminal, das Schritte umfasst, die aus Folgendem bestehen:
- Erheben der Werte einer Vielzahl von Bytes des Inhalts, indem die jeweiligen Positionen der Bytes lokalisiert werden, und Löschen oder Modifizieren der Bytes, deren Werte in dem Originalinhalt erhoben wurden, um den Inhalt in einen ersten Teil, der von dem Inhalt ohne die Bytes, deren Werte erhoben wurden, oder mit den modifizierten Bytes gebildet wird und es allein nicht erlaubt, den Originalinhalt wiederherzustellen, und in einen zweiten Teil zu teilen (20b), der von den erhobenen Bytes gebildet ist,
- Speichern (21) des ersten Teils in dem Terminal (1),
- Speichern (23) des zweiten Teils sowie der jeweiligen Positionen in dem Originalinhalt der Bytes, die den zweiten Teil bilden, in einem Speicher, der sich auf einem Träger (2) außerhalb des Terminals (1) befindet,
- Verbinden (24a) des Trägers (2) mit dem Terminal (1) und
- Wiederherstellen (25a) des Inhalts, indem die zwei Teile mit Hilfe der jeweiligen Positionen der Bytes, deren Werte erhoben wurden, kombiniert werden.

2. Verfahren nach Anspruch 1, bei dem die Bytes, deren Werte erhoben wurden, zufällig ausgewählt werden.

3. Verfahren nach Anspruch 1, bei dem die Bytes, deren Werte erhoben wurden, zufällig gezielt ausgewählt werden.

4. Verfahren nach einem der Ansprüche 1 bis 3, bei dem
- ein Inhaber des Trägers (2) Nutzungsrechte des Inhalts erwirbt (22) und
- man vor dem Wiederherstellen des Inhalts ausgehend von den zwei Inhaltsteilen die Gültigkeit der Nutzungsrechte prüft (24e) und das Wiederherstellen des Inhalts nur genehmigt, wenn die Nutzungsrechte gültig sind.

5. Verfahren nach Anspruch 4, bei dem man in dem Speicher des Trägers (2) eine Netzadresse eines Nutzungsrechteservers (4) speichert und sich das Terminal (1), um die Gültigkeit der Nutzungsrechte zu prüfen, an den Rechteserver (4) über das Netz (9) anschließt.

6. Verfahren nach einem der Ansprüche 1 bis 5, bei dem das Terminal (1) den ersten Teil des Inhalts gemäß einer der folgenden Methoden zurückgewinnt:
- durch Downloaden (21) des ersten Teils von einer Informationssite (5) über ein Netz des Typs IP,
- durch Lesen des ersten Teils auf einem externen Träger,
- durch Empfang einer elektronischen Mitteilung, die den ersten Teil des Inhalts enthält.

7. Verfahren nach einem der Ansprüche 1 bis 6, bei dem man den Träger (2) in einen Verteilungsautomaten (3) einfügt, der den zweiten Teil des Inhalts in dem Speicher des Trägers (2) speichert.

8. Verfahren nach einem der Ansprüche 1 bis 7, bei dem man den zweiten Teil des Inhalts in dem Speicher des Trägers (2) am Ende des Herstellens des Trägers speichert.

9. Verfahren nach einem der Ansprüche 1 bis 8, bei dem man den Inhalt verwürfelt (20a), bevor man ihn in zwei Teile teilt und man einen Entwürfelungsschlüssel in dem Speicher des Trägers (2) speichert (23c) .

10. Verfahren nach einem der Ansprüche 1 bis 9, bei dem man den zweiten Teil des Inhalts verwürfelt und man einen Entwürfelungsschlüssel in dem Speicher des Trägers (2) speichert.

11. Terminal zum Umsetzen des Verfahrens des Anspruchs 1, das Mittel (130) umfasst, um einen ersten Teil eines Inhalts zu erfassen, der aus dem Inhalt ohne eine Vielzahl von Bytes, deren Werte erhoben wurden, oder mit den modifizierten Bytes, und der es allein nicht erlaubt, den Originalinhalt wiederherzustellen, gebildet wird Mittel (12) zum Lesen eines externen Speicherträgers (2) und Mittel (132) zum Wiederherstellen des Inhalts durch Kombinieren des ersten Teils des Inhalts und eines zweiten Teils des Inhalts, der aus dem Speicher des Trägers (2) extrahiert wird sowie von der Vielzahl von Bytes gebildet wird, deren Werte in dem Inhalt erhoben wurden, mit Hilfe der jeweiligen Positionen der Bytes in dem Originalinhalt.

12. Terminal nach Anspruch 11, bei dem Mittel (133) vorgesehen sind, um Nutzungsrechte zu erwerben, die den Inhalt betreffen, und Mittel (131), um sich an einen Nutzungsrechteserver anzuschließen, um die Gültigkeit der Nutzungsrechte zu prüfen, die dazu bestimmt sind, die Mittel (132) zum Wiederherstellen des Inhalts zu steuern.

13. Terminal nach einem der Ansprüche 11 und 12, bei dem die Mittel (130) zum Erfassen des ersten Teils des Inhalts eingerichtet sind, um diesen ersten Teil gemäß mindestens einer der folgenden Methoden zu erfassen:
- durch Downloaden des ersten Teils von einer Informationssite (5) über ein Netz des Typs IP,
- durch Lesen des ersten Teils auf einem externen Träger,
- durch Empfang einer elektronischen Mitteilung, die den ersten Teil des Inhalts enthält.

14. Verteilungsautomat für zweite Inhaltsteile für das Umsetzen des Verfahrens des Anspruchs 1, umfassend
- Mittel zum Erfassen zweiter Inhaltsteile, die eine Vielzahl von Bytes, die in dem Originalinhalt gelöscht oder modifiziert wurden, aufweisen sowie der jeweiligen Positionen der Bytes in dem Originalinhalt,
- Bediener-Maschinen-Schnittstellenmittel (32), die eingerichtet sind, um es einem Benutzer zu erlauben, einen der zweiten Inhaltsteile auszuwählen, und
- Mittel (31) zum Speichern des ausgewählten zweiten Inhaltsteils sowie der jeweiligen Positionen in dem Originalinhalt der Bytes, die den zweiten Teil bilden, in einem Speicher eines externen Speicherträgers (2).

15. Automat nach Anspruch 14, bei dem die Mittel zum Erfassen der zweiten Inhaltsteile Mittel zum Verbinden mit einer lokalen Datenbank (30) aufweisen, die eine Vielzahl zweiter Inhaltsteile enthält.

16. Automat nach Anspruch 14, bei dem die Mittel zum Erfassen zweiter Inhaltsteile eingerichtet sind, um die zweiten Inhaltsteile von einem Server, der zweite Inhaltsteile liefert, über ein Netzwerk downzuloaden.

17. Automat nach einem der Ansprüche 14 bis 16, bei dem Mittel zum Anschließen an einen Nutzungsrechteserver vorgesehen sind, um es einem Benutzer zu erlauben, über den Automaten Nutzungsrechte bei einem Rechteserver zu kaufen.

18. Inhaltsteilelieferserver zum Umsetzen des Verfahrens des Anspruchs 1, umfassend
- eine Inhaltedatenbank (60), die eine Vielzahl von Inhalten enthält,
- Mittel (62) zum Aufspalten von Inhalt, die eingerichtet sind, um die Werte einer Vielzahl von Bytes eines Inhalts der Datenbank (60) zu erheben, indem die jeweiligen Positionen der Bytes lokalisiert werden, und um die Bytes in dem Inhalt zu löschen oder zu modifizieren, um den Inhalt in einen ersten Teil, der von dem Inhalt ohne die Bytes, deren Werte erhoben wurden, oder mit den modifizierten Bytes, gebildet wird und es allein nicht erlaubt, den Originalinhalt wiederherzustellen, und in einen zweiten Teil zu teilen (20b), der von den Bytes gebildet wird, deren Werte erhoben wurden, und
- Mittel (63) zum Senden des ersten Teils und des zweiten Teils.

19. Datenträger für das Umsetzen des Verfahrens des Anspruchs 1, der einen Speicher aufweist, der einen Teil eines Inhalts enthält, der eine Vielzahl von Bytes enthält, die in dem Originalinhalt gelöscht oder modifiziert wurden, sowie die jeweiligen Positionen der Bytes in dem Originalinhalt, wobei der Teil es erlaubt, den Inhalt wiederherzustellen.

20. Datenträger nach Anspruch 19, bei dem, in dem Fall, in dem der Inhaltsteil verwürfelt ist, der Speicher Daten enthält, die es erlauben, den Inhaltsteil zu entwürfeln.

21. System für das Umsetzen des Verfahrens des Anspruchs 1, umfassend
- einen Lieferanten (6) von Inhaltsteilen, der sich auf einem ersten Netz (8) befindet, und dazu bestimmt ist, die Werte einer Vielzahl von Bytes eines Inhalts zu erheben, indem die jeweiligen Positionen der Bytes lokalisiert werden, und die Bytes, deren Werte in dem Inhalt erhoben wurden, zu löschen oder zu modifizieren, um den Inhalt in einen ersten Teil, der von dem Inhalt ohne die Bytes, deren Werte erhoben wurden, oder mit den modifizierten Bytes gebildet wird und der es allein nicht erlaubt, den Originalinhalt wiederherzustellen, und in einen zweiten Teil zu teilen, der von den Bytes gebildet wird, deren Werte erhoben wurden,
- mindestens einen Verteilungsautomaten (3), der dazu bestimmt ist, zweite Inhaltsteile und die jeweiligen Positionen in dem Originalinhalt der Bytes, die den zweiten Teil bilden, die von dem Lieferanten (6) über das erste Netz (8) übertragen wurden, zu empfangen und die zweiten Inhaltsteile, die auf Datenträgern gespeichert sind, an Benutzer zu verteilen, und
- mindestens ein Terminal (1) zum Inhaltlesen, das dazu bestimmt ist, den ersten Teil eines Inhalts zu speichern, einen externen Datenträger zu lesen, um daraus den zweiten Teil des Inhalts und die jeweiligen Positionen der Bytes, die den zweiten Teil in dem Originalinhalt bilden, zu extrahieren und den ersten und den zweiten Teil des Inhalts zu kombinieren, um den Inhalt wiederherzustellen.

22. System nach Anspruch 21, bei dem ein Nutzungsrechteserver (4) vorgesehen ist, der dazu bestimmt ist, Nutzungsrechte, die sich auf Inhalte erstrecken, Inhabern von Datenträgern zuzuweisen.

23. System nach einem der Ansprüche 22 und 23, bei dem eine Informationssite (5) vorgesehen ist, die sich auf einem zweiten Netz (9) befindet und dazu bestimmt ist, erste Inhaltsteile an Leseterminals über das zweite Netz (9) zu übertragen.
